# FASCICULE DE BREVET EUROPEEN

(11) **EP 4 580 893 B1**
(45) Date de publication et mention de la délivrance du brevet: **03.06.2026**
(21) Numéro de dépôt: 23748820.0
(22) Date de dépôt: 04.08.2023
(51) Int. Cl.: B60C 15/00

(54) **PNEUMATIQUE AVEC UNE ARMATURE DE CARCASSE SIMPLIFIÉE**
REIFEN MIT VEREINFACHTER KARKASSENVERSTÄRKUNG
TYRE WITH SIMPLIFIED CARCASS REINFORCEMENT

(30) Priorité: 31.08.2022 FR 2208716
(43) Date de publication de la demande: 09.07.2025
(73) Titulaire: COMPAGNIE GENERALE DES ETABLISSEMENTS MICHELIN, 63000 Clermont-Ferrand (FR)
(72) Inventeur: MAILLARD, Sylvere, 63040 CLERMONT-FERRAND CEDEX 09 (FR); BOIX, Valerie-Anicia, 63040 CLERMONT-FERRAND CEDEX 09 (FR); BOMBLAIN, Viviane, 63040 CLERMONT-FERRAND CEDEX 09 (FR); MERINO LOPEZ, José, 63040 CLERMONT-FERRAND CEDEX 09 (FR); VANDAELE, Mathieu, 63040 CLERMONT-FERRAND CEDEX 09 (FR)
(74) Mandataire: M.F.P. Michelin
(86) Numéro de dépôt international: PCT/EP2023/071668
(87) Numéro de publication internationale: WO 2024/046707

(56) Documents cités:
- WO-A1-02/096676
- DE-A1- 102015 207 714
- US-A1- 2019 001 758
- US-B1- 6 273 164

## Description

### Domaine de l'invention

La présente invention concerne un pneumatique pour véhicule automobile, conçu pour avoir une fabrication standardisée de son armature de carcasse comprenant deux couches de carcasse.

### Définitions

Par convention, on considère un repère (O, OX, OY, OZ), dont le centre O coïncide avec le centre du pneumatique, les directions circonférentielles OX, axiale OY, et radiale OZ désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

La constitution du pneumatique radial est usuellement décrite par une représentation de ses constituants dans un plan méridien, c'est-à-dire un plan contenant l'axe de rotation du pneumatique. Un tel choix est motivé par l'axisymétrie de la géométrique du pneumatique autour de son axe de rotation. Le pneumatique comprend aussi un plan de symétrie orthogonal à l'axe de rotation et passant par le centre de la bande de roulement : c'est le plan équatorial.

Un pneumatique radial est destiné à venir en contact avec un sol par l'intermédiaire d'une bande de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de sommet d'un pneumatique radial comprend une superposition de couches de sommet s'étendant circonférentiellement, radialement à l'extérieur de l'armature de carcasse. Chaque couche de sommet est constituée de renforts parallèles entre eux et enrobés par un matériau polymérique de type élastomère ou mélange élastomérique. L'ensemble constitué par l'armature de sommet et la bande de roulement est appelé sommet.

L'armature de carcasse d'un pneumatique radial comprend habituellement au moins une couche de carcasse constituée d'éléments de renforcement métalliques ou textiles enrobés dans un mélange élastomérique d'enrobage. Les éléments de renforcement sont sensiblement parallèles entre eux et font, avec la direction circonférentielle, un angle compris entre 85° et 95°. La couche de carcasse comprend une partie principale, reliant les deux bourrelets entre eux et s'enroulant, dans chaque bourrelet, autour d'une structure annulaire de renforcement, qui est le plus souvent une tringle pour former une boucle de retournement.

Chaque bourrelet est donc situé radialement le plus intérieurement pour être en contact avec une jante et comprend, au moins partiellement, les composants suivants :
1. Au moins en partie, une couche étanche qui tapisse la cavité interne du pneumatique ;
2. Une armature de carcasse comprenant au moins une première couche de carcasse, positionnée axialement et radialement extérieurement à la première couche étanche ;
3. Une couche de bourrage tringle qui remplit le volume défini par la boucle de retournement de la première couche de carcasse de l'armature de carcasse autour de la tringle ;
4. Une tringle formée d'un assemblage de câbles ;
5. Une couche de bourrage de renforcement du bourrelet axialement extérieurement au retournement de la première couche de carcasse ;
6. Une couche de protection axialement la plus intérieure constituant en partie la périphérie externe du pneumatique, et destinée à être en contact avec la jante ;
7. Une couche de liaison entre l'armature de carcasse et le sommet du pneumatique ;
8. Une couche de flanc la plus axialement extérieure constituant la paroi extérieure du pneumatique en contact avec l'environnement ambient.

Pour les grosses dimensions avec des diamètres de jante au-delà de 16 pouces, le plus souvent l'armature de carcasse en plus d'une première couche de carcasse retournée autour de la tringle comprend une deuxième couche de carcasse. Suivant le positionnement de cette deuxième couche de carcasse, on distingue les bourrelets de type A et les bourrelets de type B.

Pour les bourrelets de type A, la seconde couche de carcasse est posée axialement et radialement extérieurement à la première couche de carcasse. Dans ce bourrelet, la seconde couche de carcasse est axialement extérieure au retournement de la première couche de carcasse.

Pour les bourrelets de type B, la seconde couche de carcasse est également posée axialement et radialement extérieurement à la première couche de carcasse, mais la seconde couche de carcasse est axialement intérieure au retournement de la première couche de carcasse, et en contact avec la partie principale de la première couche de carcasse avant son retournement autour de la tringle.

Les pneumatiques de structure radiale, tels que ceux présentés ci-dessus, et plus précisément leurs ébauches toriques non vulcanisées, sont habituellement fabriquées par un procédé comportant deux phases distinctes. Dans la première phase, l'ébauche cylindrique d'armature de carcasse est fabriquée sur un tambour de confection cylindrique, ladite ébauche comprenant entre autres l'armature de carcasse elle-même, les mélanges élastomériques et renforts intérieurs à ladite armature ainsi que tous les éléments constituant les bourrelets, éléments que sont les tringles, les profilés et couches de remplissage de bourrelet, armatures de renforcement de bourrelet.

On effectue, ensuite, une expansion radiale des parties de l'ébauche située radialement sous les tringles jusqu'à venir bloquer lesdites parties sous les tringles. Puis on déforme radialement la partie située entre les logements de bourrelet, pour obtenir une forme toroïdale, tout en rapprochant axialement lesdits logements. Le serrage sous les tringles doit être suffisant pour empêcher tout déplacement relatif par rapport aux tringles pendant cette opération. Cette opération, pendant laquelle on forme tout d'abord les bourrelets et ensuite les flancs du pneumatique, est appelée "retroussage".

Dans une deuxième phase, l'ébauche cylindrique d'armature de carcasse est conformée, dilatée pour prendre une forme torique, forme sur laquelle seront alors posées les éléments constituant l'armature de sommet, les profilés et couches caoutchouteuses séparant ladite armature de sommet de l'armature de carcasse, ainsi que la bande de roulement.

L'ébauche torique et non vulcanisée de pneumatique est alors introduite dans un moule de vulcanisation, ladite ébauche subissant une légère conformation supplémentaire pour aboutir aux dimensions finales du pneumatique.

En amont de la première étape de confection, on procède à la préparation des pièces détachées, c'est-à-dire, la préparation des semis finis qui sont des profilés de mélanges élastomériques obtenus grâce à des boudineuses dotées en sortie d'un outil approprié pour réaliser des pièces de mélanges élastomériques adaptées pour la fabrication de chaque poste du pneumatique. Toujours pendant la phase de préparation, les couches de tissus sont découpées aux largeurs déduites de la géométrie du pneumatique issu de la conception.

Les progrès de la technique aidant, de plus en plus de machines de confection sont automatisées. Les étapes décrites précédemment sont implantées dans une machine de fabrication automatique qui comprend le tambour conformant qui se déplace devant des postes d'enroulement des semis finis selon des étapes correspondant à la pose des produits de 1 à 8 décrits précédemment.

Des machines de confection automatiques sont configurées ou pour des bourrelets de type A ou pour des bourrelets de type B. Aujourd'hui, on rencontre des difficultés pour fabriquer successivement un premier bourrelet de type A, puis un second bourrelet de type B et inversement sur ces machines sans des adaptations qui perturbent la performance industrielle.

Une telle adaptation consiste par exemple, à modifier la machine automatique de confection en rajoutant un poste supplémentaire en confection pour apporter de la souplesse afin de pouvoir fabriquer les deux types de bourrelets.

### Technique antérieure

Dans le document FR2900097A1, on trouve des références aux bourrelets de type A, et de type B, dans un contexte de conception de pneumatique à mobilité étendue avec des flancs autoporteurs. Mais cette conception nécessite des adaptations pendant la fabrication d'un type à l'autre.

Quant au document EP0595653A1, on présente un bourrelet de type A, mais comportant des couches de renforts enrobés dans des mélanges élastomériques additionnels par rapport à des solutions usuelles. Cette solution présente l'inconvénient de dégrader le coût de revient industriel du pneumatique.

Les documents DE102015207714A1, et WO02/096676A1 montrent des architectures de pneumatiques faisant intervenir des armatures de carcasses avec aux moins deux couches de carcasses pour améliorer les performances du pneu. Les documents US6273164B1 et US2019/001758A1 traitent de pneumatiques pour des motocycles avec des armatures de carcasse de deux couches également

Les inventeurs se sont donnés pour objectif de concevoir une architecture du bourrelet d'un pneumatique qui remplace avantageusement les bourrelets de type A et B, sans dégrader les performances techniques, et industrielles.

### Exposé de l'invention

Ce but a été atteint par la conception d'un pneumatique pour véhicule de tourisme comprenant dans un plan méridien :
deux bourrelets destinés à être montés sur une jante, deux couches de flancs reliés aux bourrelets, un sommet comportant une bande de roulement destinée à entrer en contact avec un sol, le sommet ayant un premier côté relié à l'extrémité radialement extérieure de l'une des deux couches de flancs et ayant un deuxième côté relié à l'extrémité radialement extérieure de l'autre des deux couches de flancs ;
une armature de carcasse comprenant deux couches de carcasse s'étendant depuis les deux bourrelets à travers les couches de flancs jusqu'au sommet, et comportant chacun une pluralité d'éléments de renforcement de carcasse ;
la première couche de carcasse étant ancrée dans les deux bourrelets par un retournement autour d'une tringle de renforcement, de manière à former dans chaque bourrelet une partie principale et un retournement;
une couche de mélange élastomérique de bourrage tringle occupant le volume délimité par la principale, le retournement, et au moins en partie le contour radialement extérieur de la tringle;
les distances radiales (LNDEG, LNDED) étant définies dans un premier et dans un deuxième bourrelets (50) comme étant les distances radialement intérieures d'une première et d'une deuxième extrémités de la deuxième couche de carcasse (42) à une droite axiale B1 tangente à la tringle en son point le plus radialement extérieur ;
la seconde couche de carcasse étant posée axialement et radialement extérieurement à la première couche de carcasse, et positionnée dans le bourrelet axialement intérieurement au retournement de la première couche de carcasse, et axialement extérieurement à la couche de bourrage tringle de manière à ce que la seconde couche de carcasse soit en contact avec le retournement de la première couche de carcasse sur une longueur LREC ;
dans chaque bourrelet, la première couche de carcasse a un retournement de longueur HNC1 comprise entre 10% et 30% de la hauteur d'un des flancs du pneumatique, ladite longueur HNC1 étant mesurée depuis un premier point de la tringle radialement le plus intérieur jusqu'à un deuxième point constituant une extrémité radialement la plus extérieure du retournement de la première couche de carcasse ; la longueur LREC est comprise dans l'intervalle [0.6*HNC1 ; 0.9*HNC1] ; la valeur maximale des distances (LNDEG, LNDED) est comprise dans l'intervalle [2 ; 18 ] mm.

Un pneumatique de l'invention se distingue de l'état de l'art par l'architecture du bourrelet qui comprend une deuxième couche de carcasse qui est positionnée axialement et radialement extérieurement à la première couche de carcasse. Dans le bourrelet, la seconde couche de carcasse se positionne axialement intérieurement au retournement de la première couche de carcasse et axialement extérieurement à la couche de bourrage tringle. Les positions relatives des extrémités des produits dans les bourrelets sont telles que les performances techniques du produit sont garanties, et la performance industrielle maintenue en comparaison à la fabrication des solutions usuelles. Les bourrelets de l'invention remplacent avantageusement les bourrelets de type A ou B sans dégrader ni la performance industrielle, ni les performances techniques.

Un bourrelet d'un pneumatique de l'invention comprend un empilement de couches de renforts enrobés de mélanges élastomériques : la partie principale, le retournement de la première couche de carcasse, et une portion de la deuxième couche de carcasse. Les propriétés matérielles des mélanges élastomériques du bourrelet, les épaisseurs, les longueurs de recouvrement des couches sont définies de manière à optimiser le fonctionnement du bourrelet.

Selon l'invention, la longueur du retournement de la première couche de carcasse est comprise entre 10% et 30 % de la hauteur du flanc du pneumatique. Cette hauteur de flanc est normalisée pour chaque dimension pneumatique, et est accessible par exemple dans le manuel de spécifications de l'ETRTO (Organisation Européenne pour les Pneumatiques et les Jantes). Il est également possible d'estimer sa valeur à partir de la désignation normalisée du pneumatique. Les inventeurs ont paramétré la longueur du retournement HNC1 en fonction de la hauteur du flanc de manière à généraliser le fonctionnement de l'invention à toutes les dimensions tourisme. Quand HNC1 est égale à environ 10% de la hauteur du flanc, on évite le déroulement du renfort de la première couche de carcasse sous la tringle. En effet, si la longueur du retournement est insuffisante, c'est-à-dire inférieure à 10% de la hauteur flanc, les tensions dans la première couche de carcasse entraînent le retrait des renforts, et le pneumatique peut subir des endommagements irréversibles. Selon les inventeurs, HNC1 devrait être inférieure à 30% de la hauteur flanc de manière à éviter la zone de flexion maximale quand le pneumatique est en rotation, et écrasé par la charge portée.

Dans le cadre de l'invention, un état mécaniquement couplé dans un empilement de couches composites d'au moins deux couches comprenant chacune des renforts enrobés dans un mélange élastomérique est défini pour un pneumatique gonflé, monté sur une jante, en étant soumis à une pression de gonflage de 250kPa. Dans ces conditions de sollicitations, l'état mécaniquement couplé est atteint quand les déformations de cisaillements dans les directions axiales et radiales dans le mélange élastomérique situé entre les renforts sont constantes sur toute la longueur de l'empilement. Dans ces conditions, la rigidité d'extension dans les renforts est maximale, et l'empilement de couches composites contribue au maximum de son potentiel au fonctionnement du bourrelet.

Une première condition pour atteindre le couplage mécanique dans l'empilement de couches composites du bourrelet, est d'avoir la distance radiale entre les centres de deux renforts adjacents d'une première et d'une deuxième couches de l'empilement, inférieure à une fois et demi le diamètre d'un renfort desdites couches. Une deuxième condition est d'avoir une longueur de recouvrement suffisante entre le retournement de la première couche de carcasse et une portion radialement intérieure de la deuxième couche de carcasse. Selon les inventeurs, dans le cadre des pneumatiques tourisme une longueur LREC de recouvrement, comprise dans l'intervalle [0.6*HNC1 ; 0.9*HNC1] est suffisante.

Le critère de couplage mécanique des couches d'un empilement s'exprime en fonction du diamètre des renforts desdites couches. Pour déterminer le diamètre d'un renfort textile, on utilise un appareil qui, à l'aide d'un récepteur composé d'un système optique collecteur, d'une photodiode et d'un amplificateur, permet de mesurer l'ombre du renfort éclairé par un faisceau LASER de lumière parallèle avec une précision de 0.1 micromètre. Un tel appareil est commercialisé par exemple par la société Z-Mike, sous la référence « 1210 ». La méthode consiste à fixer sur une table mobile motorisée, sous une pré-tension standard de 0,5 centi-newton par tex (cN/tex), un échantillon du renfort dont on souhaite mesurer le diamètre, ayant subi un conditionnement préalable. Solidaire de la table mobile, le renfort est déplacé perpendiculairement au système de mesure d'ombre portée à une vitesse de 25 mm/s et coupe orthogonalement le faisceau LASER. Au moins 200 mesures d'ombres portées sont effectuées sur une longueur de 420 mm de câblé ; la moyenne de ces mesures d'ombre portée représente le diamètre du renfort.

Pour faciliter la fabrication industrielle, les inventeurs proposent que la valeur maximale des distances (LNDEG, LNDED), qui représente la distance maximale depuis l'extrémité radialement la plus intérieure de la seconde couche de carcasse à la droite axiale B1 tangente à la tringle en son point le plus radialement extérieur, soit comprise dans l'intervalle [2 ; 18] mm.

Toujours dans l'optique de l'optimisation industrielle, selon l'invention, dans chaque bourrelet l'épaisseur axiale, EBT, de la couche de bourrage tringle mesurée depuis une extrémité de la deuxième couche de carcasse la plus radialement intérieure à la partie principale de la première couche de carcasse est comprise dans l'intervalle [EBTmin ; EBTmax], où EBTmin est égale à 0.3 fois le diamètre extérieur de la tringle, de préférence 0.5 fois le diamètre extérieur de la tringle, et EBTmax est égale 1.2 fois le diamètre extérieur de cette même tringle.

La combinaison des caractéristiques principales de l'invention conduit au pneumatique de l'invention qui permet de remplacer avantageusement les bourrelets de type A et/ou B en fabrication tout en garantissant un niveau de performances identiques.

En complément aux caractéristiques principales de l'invention, les inventeurs ont identifié des leviers liés à la géométrie des produits et leurs propriétés matérielles pour mieux optimiser encore le compromis les performances techniques et industrielles.

Les distances (LNDEG, LNDED) sont des exemples de cotes d'architecture du pneumatique qui permettent des ajustements des longueurs des couches de carcasse. Avantageusement les distances (LNDEG, LNDED) sont identiques dans chacun des deux bourrelets.

En ayant la même distance (LNDEG, LNDED) de part et d'autre du plan équatorial, on centre ainsi l'armature de carcasse par rapport à l'axe (OZ), ce qui a pour effet de contribuer à l'amélioration de l'uniformité du pneumatique, en évitant des balourds qui seraient liés à une répartition des masses et des efforts qui ne respecteraient pas les symétries du pneumatique.

Selon un mode de réalisation de l'invention, la deuxième couche de carcasse est discontinue. La deuxième couche de carcasse peut se retrouver en compression dans une zone située au centre de la bande roulement, après le gonflage et montage du pneumatique sur une jante. Selon les inventeurs, on peut supprimer la portion de la deuxième couche de carcasse se trouvant dans cette zone de compression. Dans ces conditions, la deuxième couche de carcasse prend la forme de deux portions positionnées de part et d'autre du plan équatorial, et allant du bourrelet à l'épaule du pneumatique.

Il existe d'autres configurations où la deuxième couche de carcasse est discontinue, quand par exemple, elle est constituée d'une succession de portions de couches de carcasse.

Préférentiellement, la tension répartie de rupture de chacune des couches de carcasse est supérieure ou égale à 11 daN/mm, la tension répartie de rupture étant le produit de la force de rupture d'un renfort d'une couche par le pas de la couche.

La tension répartie dans une couche est le produit de la contrainte dans la direction des renforts par l'épaisseur de ladite couche de carcasse. Selon les inventeurs, chaque couche de carcasse doit être suffisamment dimensionnée avec une valeur de tension répartie d'au moins 11 daN/mm. La longueur de la deuxième couche de carcasse peut être diminuée suivant les valeurs affectées à LREC et (LNDEG, LNDED), et HNC1, mais l'armature de carcasse dans son ensemble doit garder une résistance en extension dans la direction des renforts suffisante.

Préférentiellement, la première et seconde couches de carcasse sont constituées des mêmes matériaux. Ce mode de réalisation est motivé pour des raisons de standardisation et donc de réduction de coûts de matière, en utilisant les mêmes matériaux pour les deux couches de carcasse. Pour amplifier cette standardisation, non seulement les matériaux sont les mêmes, mais la nature et l'assemblage des renforts sont identiques ainsi que la densité des renforts dans chaque couche, de même que le mélange élastomérique d'enrobage.

Préférentiellement, les renforts des couches de carcasse sont des câbles en textile, chaque câble étant obtenu par un retordage d'une torsion T2 de N brins d'un matériau textile dans une direction donnée D1 (respectivement sens S ou Z), avec N≥1, chaque brin résultant d'un surtordage d'une torsion T1 d'un filé dudit matériau textile, dans une direction opposée D2 (respectivement Z ou S).

Préférentiellement, les filés sont constitués d'un assemblage hybride de filaments de matériaux textiles (tels que nylon, PET, aramide).

Avantageusement, le nombre N de brins pour le retordage est compris entre 2 et 6, et préférentiellement N = 2.

Préférentiellement la torsion de surtordage T1, et la torsion de retordage T2 sont identiques, et inférieures à 500 tours par mètre, préférentiellement T1, et T2 sont identiques et inférieures à 440 tours par mètre, et encore plus préférentiellement T1 et T2 sont identiques et inférieures ou égales à 315 tours par mètre.

Selon un autre mode de réalisation, dans chaque bourrelet, une couche latérale de renforcement du bourrelet est positionnée axialement extérieurement au retournement de la première couche de carcasse, et en contact avec d'une part ledit retournement et d'autre part au moins partiellement, axialement extérieurement avec une couche de flanc.

Selon ce mode de réalisation particulièrement avantageux, la couche de bourrage de tringle et la couche latérale de renforcement du bourrelet sont constituées du même mélange élastomérique doté d'un module élastique de cisaillement supérieur ou égal à 25 MPa, ledit module étant mesuré sous une déformation alternée à une fréquence de 10 hz, et à une température de 23°C.

### Brève description des dessins

D'autres détails et caractéristiques avantageux de l'invention ressortiront ci-après de la description des exemples de réalisation de l'invention en référence aux figures qui représentent des vues méridiennes de schémas d'un pneumatique selon des modes de réalisation. Les figures ne sont pas représentées à l'échelle pour en simplifier la compréhension.
La figure 1 comprend une vue 1-A qui montre une section d'un pneumatique de l'invention dans un plan méridien, et une vue 1-B qui représente un grossissement d'une portion de la vue méridienne 1-A entourée d'un cercle en tirets montrant un bourrelet d'un pneumatique de l'invention.
Les figures 2-A, 2-B montrent des pneumatiques de l'état de l'art avec des bourrelets de type A (figure 2-A), et des bourrelets de type B (figure 2-B).
Les figures 3-A, et 3-B montrent des modes de réalisation où la première et/ou la deuxième couches de carcasse sont discontinues.
Quant à la figure 4, un bourrelet d'un pneumatique de l'invention est représenté avec la schématisation des principales côtes de l'invention.

### Description détaillée de l'invention

L'invention a été mise en œuvre sur un pneumatique tourisme de dimension 245/70R16, selon la norme de spécifications de l'ETRTO (Organisation Technique Européenne des jantes et Pneumatiques). Un tel pneumatique avec une indice de charge de 111, peut porter une charge de 1090 kilos, gonflé à une pression de 290 kPa.

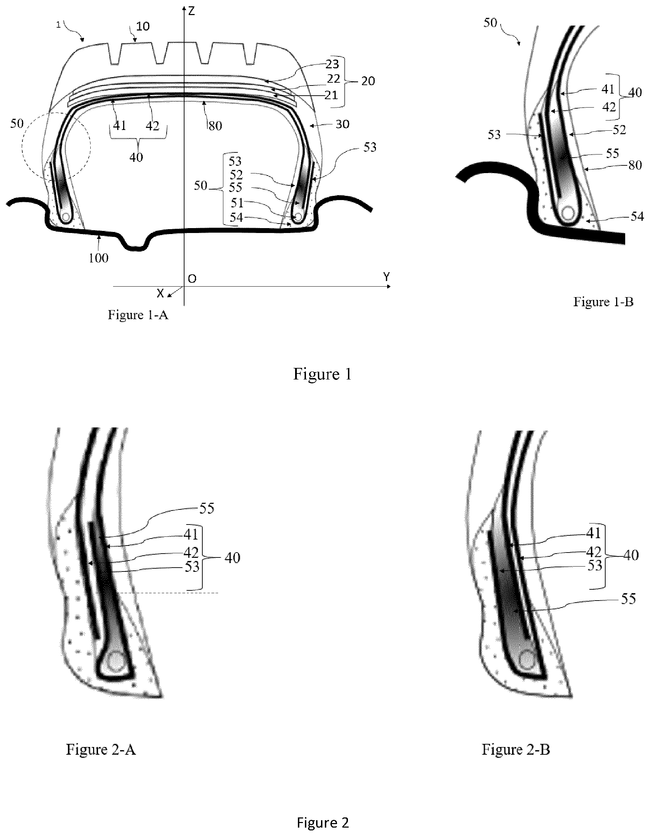

Sur la figure 1-A, le pneumatique de référence générale 1 comprend une armature de carcasse 40 constituée d'une première couche de carcasse 41 qui comporte une partie principale 52, reliant deux bourrelets 50 entre eux et s'enroulant, dans chaque bourrelet 50 autour d'une structure annulaire de renforcement. La structure annulaire de renforcement est une tringle 51 qui comprend un élément rigide circonférentiel le plus souvent métallique entouré d'au moins un matériau, de manière non exhaustive, métallique, élastomérique ou textile. L'enroulement de la couche de carcasse 41 autour de la tringle 51 va de l'intérieur vers l'extérieur du pneumatique 1 pour former un retournement 53, comprenant une extrémité radialement extérieure. Le retournement 53, dans chaque bourrelet 50, permet l'ancrage de la couche de carcasse 41 à la tringle 51 du bourrelet 50.

Les éléments de renforcement de chaque couche de carcasse (41, 42) sont sensiblement parallèles entre eux et font, avec la direction circonférentielle, un angle compris entre 85° et 95°.

Chaque bourrelet 50 comprend une couche de bourrage tringle 55 prolongeant radialement vers l'extérieur la tringle 51. La couche de bourrage tringle 55 est constituée d'au moins un mélange élastomérique de bourrage. La couche de bourrage sépare axialement la partie principale 52 et le retournement 53 de l'armature de carcasse 41.

Chaque bourrelet 50 comprend également une couche de protection 54 prolongeant radialement vers l'intérieur le flanc 30 et axialement extérieur au retournement 53. La couche de protection 54 est également au moins en partie en contact par sa face axialement extérieure avec un crochet d'une jante 100. La couche de protection 54 est constituée d'au moins un mélange élastomérique de protection.

Le pneumatique 1 comporte en outre une armature de sommet 20 comprenant deux couches de travail 21, 22, et une couche de frettage 23. Chacune des couches de travail 21 et 22 est renforcée par des éléments de renforcement filaires qui sont parallèles dans chaque couche et croisés d'une couche à l'autre, en faisant avec la direction circonférentielle des angles compris entre 10° et 70°. La couche de frettage 23, disposée radialement à l'extérieur des couches (21, 22), étant formée d'éléments de renforcement orientés circonférentiellement et enroulés en spirale dans la largeur axiale du sommet. Une bande de roulement 10 est posée radialement extérieurement sur la couche de frettage 23 ; c'est cette bande de roulement 10 qui assure le contact du pneumatique 1 avec un sol. Le pneumatique 1 représenté est un pneu « tubeless » : il comprend une « gomme intérieure » 80 en composition caoutchouteuse imperméable au gaz de gonflage, recouvrant la surface intérieure du pneumatique.

Les figures 2-A, 2-B montrent des pneumatiques de l'état de l'art avec des bourrelets de type A (figure 2-A), et des bourrelets de type B (figure 2-B). On y retrouve l'armature de carcasse 40 comprenant les couches de carcasse (41, 42), et le retournement 53. La couche de bourrage tringle 55 est une couche de mélange élastomérique remplissant le volume délimité par la partie principale de la première couche de carcasse 41, et son retournement 53.

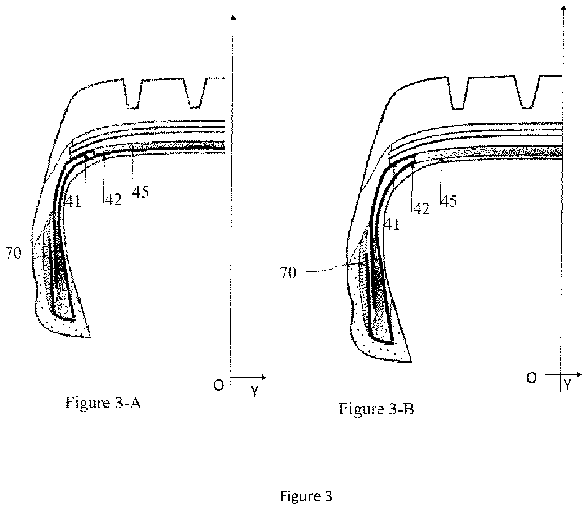

Les figures 3-A, 3-B, montrent des exemples de modes de réalisation d'un pneumatique de l'invention avec des couches de l'armature de carcasse non continues. Sur la figure 3-A, la deuxième couche de carcasse est tronquée sur une zone qui s'étend au centre du sommet, alors que sur la figure 3-B, ce sont les deux couches de carcasses qui sont tronquées dans cette même zone. Dans les deux cas où les couches de carcasse sont discontinues, une couche de mélange élastomérique 45 se substitue aux couches de carcasse localement absentes. L'ajout d'une couche latérale de renforcement 70 peut s'avérer nécessaire pour maintenir la rigidité du bourrelet à niveau suffisant pour un bon fonctionnement du pneumatique.

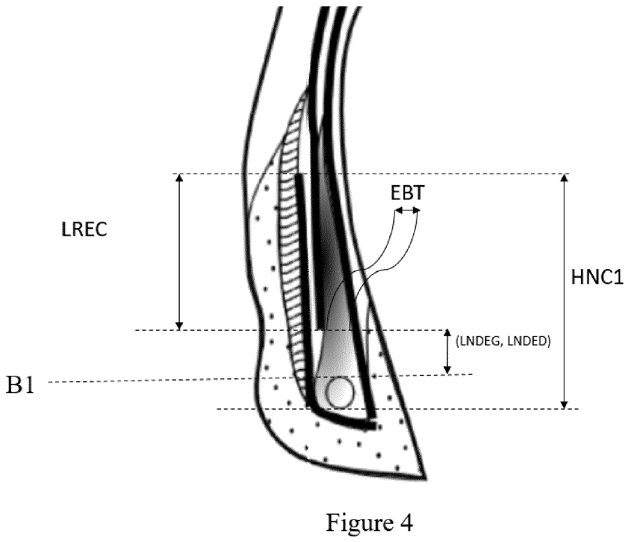

La figure 4 montre les principales côtes d'architecture d'un bourrelet d'un pneumatique de l'invention. Dans un bourrelet, la côte LREC désigne la longueur de la zone de contact entre le retournement 53 de la première couche de carcasse 41 et une partie radialement intérieure de la deuxième couche de carcasse 42. La côte LREC intervient dans le couplage mécanique de l'empilement constitué par la partie principale 52 de la première couche de carcasse 41, du retournement 53 et de la partie radialement intérieure de la deuxième couche de carcasse 42. Quand LREC est affectée à une valeur suffisante pour l'établissement du couplage mécanique, l'empilement de couches composites forme un bloc rigide qui confère au bourrelet le niveau maximum de rigidités radiales et axiales. L'épaisseur de la couche de bourrage tringle, EBT, ainsi que son module élastique de cisaillement sont d'autres paramètres intervenant dans l'établissement du couplage mécanique de l'empilement. La longueur du retournement HNC1 doit être suffisante pour éviter le déroulement de la première couche de carcasse sous la tringle, sans pour autant se retrouver dans la zone de compression consécutive à l'écrasement du pneumatique par la charge portée. Les longueurs radiales LNDEG, et LNDED sont associées à la mise au point de la déconformation du pneumatique de l'invention. La déconformation d'un pneumatique consiste à partir de la version théorique vulcanisée conçue par exemple par conception assistée par ordinateur à remonter aux pièces détachées non vulcanisées, puis empilées autour de tambours de confection et de finition. La longueur radiale LNDED est la longueur symétrique de LNDEG par rapport à l'axe (OZ) dans le deuxième bourrelet du pneumatique.

Des configurations de pneumatiques de l'invention ont été testées pour bien mettre en exergue les performances apportées par l'invention. Les résultats de ces tests sont comparés à ceux obtenus pour des pneumatiques témoins.

Un premier témoin T1 est un pneumatique de conception usuelle qui comporte un bourrelet de type A, un deuxième pneumatique témoin T2 a un bourrelet de type B. Chacun des pneumatiques (T1, T2) comprend deux couches de carcasse (41, 42) constituées des mêmes matériaux : chaque couche de carcasse (41, 42) comprend des renforts en polyester formés de deux fils d'un titre de 140 tex chacun, surtordés et retordés, sous une tension de 420 tours par mètre, et enrobés d'un mélange élastomérique. La tension répartie de rupture dans une couche de carcasse est 22 daN/mm.

Le pneumatique P1 conforme à l'invention est doté des mêmes couches de carcasse (41, 42) que les témoins. Les principales côtes d'architecture de P1 sont :

**[Tableau 1]**

| LREC (mm) | LNDEG (mm) | LNDEG (mm) | EBT (mm) | HNC1 (mm) | Hauteur Flanc (mm) | Diamètre tringle (mm) |
|---|---|---|---|---|---|---|
| 18 | 4 | 4 | 5.3 | 30 | 129 | 6.10 |

On vérifie aisément que le pneumatique P1 est conforme à l'invention.

Le test de résistance au roulement a été opéré selon la norme ISO 28580. Pour un pneumatique testé, le résultat est le coefficient de résistance au roulement qui représente le rapport de la force de résistance à l'avancée du véhicule par hystérèse des pneumatiques divisé par la charge portée.

Les mesures de rigidité de dérive transversales ont été faites sur des machines de mesures dédiées comme par exemple celles commercialisées par la société MTS.

Le test d'endurance consiste à soumettre un pneumatique à des cycles de sollicitations en charges et en pressions quand il est écrasé contre un volant en rotation. Un tel test est décrit par exemple dans le règlement UNECE/R30, (Commission Economique de l'Organisation des Nations Unies pour l'Europe), requis pour l'homologation technique des pneumatiques.

Un résultat supérieur (respectivement inférieur) à 100% signifie une amélioration (respectivement une dégradation) de la performance considérée.

Les résultats obtenus sont synthétisés dans le tableau n° 2 suivant :

**[Tableau 2] :**

| | Résistance au roulement | Rigidité de dérive transversale | Endurance |
|---|---|---|---|
| T1 | 100 | 100 | 100 |
| T2 | 100 | 98 | 100 |
| P1 | 100 | 99 | 102 |

Le pneumatique de l'invention répond à l'objectif de se situer à un niveau de performances technique identiques à ceux des pneumatiques témoins T1 et T2. Le niveau de rigidité de dérive transversal est sensiblement en retrait mais dans des proportions non perceptibles par un utilisateur, et qui n'affectent pas le comportement du véhicule.

Le pneumatique P1 de l'invention remplace avantageusement les pneumatiques avec des bourrelets de type A et/ou de type B. Cette solution améliore la performance industrielle en comparaison de la fabrication successive de pneumatiques de type A et de type B, qui nécessitait des adaptations des procédés.

## Revendications

1. Pneumatique (1) pour véhicule de tourisme comprenant :
deux bourrelets (50) destinés à être montés sur une jante (100), deux couches de flancs (30) reliés aux bourrelets (50), un sommet (20) comportant une bande de roulement (10) destinée à entrer en contact avec un sol, le sommet (20) ayant un premier côté relié à l'extrémité radialement extérieure de l'une des deux couches de flancs (30) et ayant un deuxième côté relié à l'extrémité radialement extérieure de l'autre des deux couches de flancs (30) ;
une armature de carcasse (40) comprenant deux couches de carcasse (41, 42) s'étendant depuis les deux bourrelets (50) à travers les couches de flancs (30) jusqu'au sommet (20), et comportant chacun une pluralité d'éléments de renforcement de carcasse ;
la première couche de carcasse (41) étant ancrée dans les deux bourrelets (50) par un retournement (53) autour d'une tringle de renforcement (51), de manière à former dans chaque bourrelet une partie principale (52) et un retournement (53);
une couche de mélange élastomérique de bourrage tringle (55) occupant le volume délimité par ladite partie principale (52), le retournement (53), et au moins en partie le contour radialement extérieur de la tringle (51) ;
les distances radiales (LNDEG, LNDED) étant définies dans un premier et dans un deuxième bourrelets (50) comme étant les distances radialement intérieures d'une première et d'une deuxième extrémités de la deuxième couche de carcasse (42) à une droite axiale B1 tangente à la tringle en son point le plus radialement extérieur ;
la seconde couche de carcasse (42) étant posée axialement et radialement extérieurement à la première couche de carcasse (41), et positionnée dans le bourrelet (50) axialement intérieurement au retournement de la première couche de carcasse (41), et axialement extérieurement à la couche de bourrage tringle (55) de manière à ce que la seconde couche de carcasse (42) soit en contact avec le retournement (53) de la première couche de carcasse (41)sur une longueur LREC ;
dans chaque bourrelet (50), la première couche de carcasse (41) a un retournement (53) de longueur HNC1 comprise entre 10% et 30% de la hauteur d'un des flancs (30) du pneumatique (1), ladite longueur HNC1 étant mesurée depuis un premier point de la tringle (51) radialement le plus intérieur jusqu'à un deuxième point constituant une extrémité radialement la plus extérieure du retournement (53) de la première couche de carcasse (41), la longueur LREC est comprise dans l'intervalle [0.6*HNC1 ; 0.9*HNC1], la valeur maximale des distances (LNDEG, LNDED) est comprise dans l'intervalle [2 ; 18 ] mm, ledit pneumatique (1) est **caractérisé en ce que** dans chaque bourrelet (50), l'épaisseur axiale EBT, de la couche de bourrage tringle (55) mesurée depuis une extrémité de la deuxième couche de carcasse (42) la plus radialement intérieure à la partie principale (52) de la première couche de carcasse (41) est comprise dans l'intervalle [EBTmin ; EBTmax], où EBTmin étant égale à 0.3 fois le diamètre extérieur de la tringle (51), et EBTmax étant égale 1.2 fois le diamètre extérieur de cette même tringle (51).

2. Pneumatique (1) selon 1a revendication 1, **dans lequel** les distances radiales (LNDEG, LNDED) sont identiques dans chacun des deux bourrelets (50).

3. Pneumatique (1) selon l'une des revendications précédentes, **dans lequel** la deuxième couche de carcasse (42) est discontinue.

4. Pneumatique (1) selon l'une des revendications précédentes **dans lequel** la tension répartie de rupture de chacune des couches de carcasse (41, 42) est supérieure ou égale à 11 daN/mm, la tension répartie de rupture étant le produit de la force de rupture d'un renfort d'une couche par le pas de la couche.

5. Pneumatique (1) selon la revendication 4 **dans lequel** la première et seconde couches de carcasse (41, 42) sont constituées des mêmes matériaux.

6. Pneumatique (1) selon l'une des revendications 4 à 5, **dans lequel** les renforts des couches de carcasse (41, 42) sont des câbles textiles, chaque câble étant obtenu par un retordage d'une torsion T2 de N brins d'un matériau textile dans une direction donnée D1 respectivement sens S ou Z, avec N≥1, chaque brin résultant d'un surtordage d'une torsion T1 d'un filé dudit matériau textile, dans une direction opposée D2 respectivement Z ou S.

7. Pneumatique (1) selon la revendication précédente, **dans lequel** les filés sont constitués d'un assemblage hybride de filaments de matériaux textiles tels que nylon, PET, aramide.

8. Pneumatique (1) selon l'une des revendications 6 à 7, **dans lequel** le nombre N de brins pour le retordage est compris entre 2 et 6, et préférentiellement N = 2.

9. Pneumatique (1) selon l'une des revendications 6 à 8, **dans lequel** la torsion de surtordage T1, et la torsion de retordage T2 sont identiques, et inférieures à 500 tours par mètre, préférentiellement T1, et T2 sont identiques et inférieures à 440 tours par mètre, et encore plus préférentiellement T1 et T2 sont identiques et inférieures ou égales à 315 tours par mètre.

10. Pneumatique (1) selon l'une des revendications précédentes, **dans lequel** dans chaque bourrelet (50), une couche latérale de renforcement (70) est positionnée axialement extérieurement au retournement (53) de la première couche de carcasse (41), et en contact avec d'une part ledit retournement (53) et d'autre part au moins partiellement, axialement extérieurement avec une couche de flanc (30).

11. Pneumatique (1) selon la revendication précédente, **dans lequel** la couche de bourrage de tringle (55) et la couche latérale de renforcement (70) du bourrelet (50) sont constituées du même mélange élastomérique doté d'un module élastique de cisaillement supérieur ou égal à 25 MPa, ledit module étant mesuré sous une déformation alternée à une fréquence de 10 hz, et sous une température de 23°C.

## Patentansprüche

1. Reifen (1) für einen Personenkraftwagen, umfassend:
zwei Wülste (50), die dazu bestimmt sind, auf einer Felge (100) montiert zu werden, zwei Flankenlagen (30), die mit den Wülsten (50) verbunden sind, einen Gürtel (20), der einen Laufstreifen (10) beinhaltet, der dazu bestimmt ist, mit einem Boden in Kontakt zu gelangen, wobei der Gürtel (20) eine erste Seite aufweist, die mit dem radial äußeren Ende der einen der zwei Flankenlagen (30) verbunden ist, und eine zweite Seite aufweist, die mit dem radial äußeren Ende der anderen der zwei Flankenlagen (30) verbunden ist;
eine Karkassenverstärkung (40), die zwei Karkassenlagen (41, 42) umfasst, die sich von den zwei Wülsten (50) durch die Flankenlagen (30) bis zu dem Gürtel (20) erstrecken und jeweils eine Vielzahl von Karkassenfestigkeitselementen beinhalten;
wobei die erste Karkassenlage (41) durch einen Umschlag (53) um einen Festigkeitskern (51) in den zwei Wülsten (50) verankert ist, um in jedem Wulst einen Hauptteil (52) und einen Umschlag (53) zu bilden;
eine Kernreiterlage aus einer Elastomermischung (55), die das Volumen einnimmt, das durch den Hauptteil (52), den Umschlag (53) und mindestens teilweise die radial äußere Kontur des Kerns (51) begrenzt wird;
wobei in einem ersten und in einem zweiten Wulst (50) die radialen Abstände (LNDEG, LNDED) als die radial inneren Abstände eines ersten und eines zweiten Endes der zweiten Karkassenlage (42) zu einer axialen Geraden B1, die den Kern an seinem radial äußersten Punkt tangiert, definiert sind;
wobei die zweite Karkassenlage (42) axial und radial außerhalb der ersten Karkassenlage (41) angeordnet ist und in dem Wulst (50) axial innerhalb des Umschlags der ersten Karkassenlage (41) und axial außerhalb der Kernreiterlage (55) positioniert ist, sodass die zweite Karkassenlage (42) über eine Länge LREC mit dem Umschlag (53) der ersten Karkassenlage (41) in Kontakt ist;
die erste Karkassenlage (41) weist in jedem Wulst (50) einen Umschlag (53) mit einer Länge HNC1 von zwischen 10 % und 30 % der Höhe einer der Flanken (30) des Reifens (1) auf, wobei die Länge HNC1 von einem ersten, radial innersten Punkt des Kerns (51) bis zu einem zweiten Punkt, der ein radial äußerstes Ende des Umschlags (53) der ersten Karkassenlage (41) bildet, gemessen wird, die Länge LREC ist in dem Intervall [0,6*HNC1; 0,9*HNC1] enthalten, der maximale Wert der Abstände (LNDEG, LNDED) ist in dem Intervall [2; 18 ] mm enthalten, der Reifen (1) ist **dadurch gekennzeichnet, dass** in jedem Wulst (50) die axiale Dicke EBT der Kernreiterlage (55), gemessen von einem radial innersten Ende der zweiten Karkassenlage (42) zu dem Hauptteil (52) der ersten Karkassenlage (41), in dem Intervall [EBTmin; EBTmax] enthalten ist, wobei EBTmin das 0,3-fache des Außendurchmessers des Kerns (51) beträgt und EBTmax das 1,2-fache des Außendurchmessers desselben Kerns (51) beträgt.

2. Reifen (1) nach Anspruch 1, wobei die radialen Abstände (LNDEG, LNDED) in jedem der zwei Wülste (50) identisch sind.

3. Reifen (1) nach einem der vorhergehenden Ansprüche, wobei die zweite Karkassenlage (42) diskontinuierlich ist.

4. Reifen (1) nach einem der vorhergehenden Ansprüche, wobei die verteilte Bruchspannung jeder der Karkassenlagen (41, 42) größer als oder gleich 11 daN/mm ist, wobei die verteilte Bruchspannung das Produkt aus der Bruchkraft eines Festigkeitselements einer Lage und der Schrittweite der Lage ist.

5. Reifen (1) nach Anspruch 4, wobei die erste und die zweite Karkassenlage (41, 42) aus den gleichen Materialen bestehen.

6. Reifen (1) nach einem der Ansprüche 4 bis 5, wobei die Festigkeitselemente der Karkassenlagen (41, 42) Textilkorde sind, wobei jeder Kord durch eine Torsionszwirnung T2 von N Strängen eines textilen Materials in einer gegebenen Richtung D1, Drehrichtung jeweils S oder Z, erhalten wird, mit N≥1, wobei jeder Strang aus einer Überzwirnung einer Torsion T1 eines Garns des textilen Materials in einer entgegengesetzten Richtung D2, jeweils Z oder S, resultiert.

7. Reifen (1) nach dem vorhergehenden Anspruch, wobei die Garne aus einer Hybridanordnung von Filamenten textiler Materialien, wie etwa Nylon, PET, Aramid, bestehen.

8. Reifen (1) nach einem der Ansprüche 6 bis 7, wobei die Anzahl N von Strängen für die Zwirnung zwischen 2 und 6 liegt und vorzugsweise N = 2 ist.

9. Reifen (1) nach einem der Ansprüche 6 bis 8, wobei die Überzwirnungstorsion T1 und die Zwirnungstorsion T2 identisch und kleiner als 500 Umdrehungen pro Meter sind, vorzugsweise T1 und T2 identisch und kleiner als 440 Umdrehungen pro Meter sind und noch stärker bevorzugt T1 und T2 identisch und kleiner als oder gleich 315 Umdrehungen pro Meter sind.

10. Reifen (1) nach einem der vorhergehenden Ansprüche, wobei in jedem Wulst (50) eine seitliche Festigkeitslage (70) axial außerhalb des Umschlags (53) der ersten Karkassenlage (41) und in Kontakt mit einerseits dem Umschlag (53) und andererseits axial außen mindestens teilweise mit einer Flankenlage (30) positioniert ist.

11. Reifen (1) nach dem vorhergehenden Anspruch, wobei die Kernreiterlage (55) und die seitliche Festigkeitslage (70) des Wulsts (50) aus der gleichen Elastomermischung bestehen, die über einen elastischen Schermodul größer als oder gleich 25 MPa verfügt, wobei der Modul unter einer Wechselverformung bei einer Frequenz von 10 Hz und bei einer Temperatur von 23 °C gemessen wird.

## Claims

1. Tyre (1) for a passenger vehicle, comprising:
two beads (50) intended to be mounted on a rim (100), two sidewall layers (30) connected to the beads (50), and a crown (20) having a tread (10) intended to come into contact with the ground, the crown (20) having a first side connected to the radially outer end of one of the two sidewall layers (30) and a second side connected to the radially outer end of the other one of the two sidewall layers (30);
a carcass reinforcement (40) comprising two carcass layers (41, 42) extending from the two beads (50) through the sidewall layers (30) as far as the crown (20), and each comprising a plurality of carcass reinforcing elements;
the first carcass layer (41) being anchored in the two beads (50) by a turn-up (53) around a reinforcing bead wire (51), so as to form, in each bead, a main part (52) and a turn-up (53);
a bead filler layer (55), of elastomer compound, occupying the volume delimited by said main part (52), the turn-up (53), and at least partially the radially outer contour of the bead wire (51);
the radial distances (LNDEG, LNDED) being defined in a first and in a second bead (50) as being the radially inner distances of a first and of a second end of the second carcass layer (42) from an axial straight line B1 tangential to the bead wire at its radially outermost point;
the second carcass layer (42) being laid axially and radially on the outside of the first carcass layer (41), and positioned in the bead (50) axially on the inside of the turn-up of the first carcass layer (41), and axially on the outside of the bead filler layer (55) such that the second carcass layer (42) is in contact with the turn-up (53) of the first carcass layer (41) over a length LREC;
in each bead (50), the first carcass layer (41) has a turn-up (53) of length HNC1 ranging between 10% and 30% of the height of one of the sidewalls (30) of the tyre (1), said length HNC1 being measured from a first, radially innermost point of the bead wire (51) to a second point constituting a radially outermost end of the turn-up (53) of the first carcass layer (41), the length LREC is comprised in the range [0.6*HNC1; 0.9*HNC1], the maximum value of the distances (LNDEG, LNDED) is comprised in the range [2; 18] mm, said tyre (1) is **characterized in that**, in each bead (50), the axial thickness EBT of the bead filler layer (55) measured from a radially innermost end of the second carcass layer (42) to the main part (52) of the first carcass layer (41) is comprised in the range [EBTmin; EBTmax], where EBTmin is equal to 0.3 times the outside diameter of the bead wire (51), and EBTmax being equal to 1.2 times the outside diameter of this same bead wire (51).

2. Tyre (1) according to Claim 1, **wherein** the radial distances (LNDEG, LNDED) are identical in each of the two beads (50).

3. Tyre (1) according to either of the preceding claims, **wherein** the second carcass layer (42) is discontinuous.

4. Tyre (1) according to one of the preceding claims, **wherein** the distributed breaking tension of each of the carcass layers (41, 42) is greater than or equal to 11 daN/mm, the distributed breaking tension being the product of the breaking force of a reinforcer of a layer times the pitch of the layer.

5. Tyre (1) according to Claim 4, **wherein** the first and second carcass layers (41, 42) are made of the same materials.

6. Tyre (1) according to either of Claims 4 and 5, **wherein** the reinforcers of the carcass layers (41, 42) are textile cords, each cord being obtained by twisting a twist T2 of N strands of a textile material in a given direction D1, respectively in the S or Z direction, with N≥1, each strand resulting from overtwisting a twist T1 of a spun yarn of said textile material in an opposite direction D2, which is Z or S, respectively.

7. Tyre (1) according to the preceding claim, **wherein** the spun yarns are made of a hybrid assembly of filaments of textile materials such as nylon, PET, aramid.

8. Tyre (1) according to either of Claims 6 and 7, **wherein** the number N of strands for the twisting ranges between 2 and 6, and preferentially N = 2.

9. Tyre (1) according to one of Claims 6 to 8, **wherein** the overtwisting twist T1 and the twisting twist T2 are identical, and less than 500 turns per metre, preferentially T1 and T2 are identical and less than 440 turns per metre, and more preferentially still T1 and T2 are identical and less than or equal to 315 turns per metre.

10. Tyre (1) according to one of the preceding claims, **wherein,** in each bead (50), a lateral reinforcing layer (70) is positioned axially on the outside of the turn-up (53) of the first carcass layer (41), and in contact on one side with said turn-up (53) and on the other side at least partially, axially on the outside, with a sidewall layer (30).

11. Tyre (1) according to the preceding claim, **wherein** the bead filler layer (55) and the lateral reinforcing layer (70) of the bead (50) are made of the same elastomer compound provided with an elastic shear modulus greater than or equal to 25 MPa, said modulus being measured under alternating strain at a frequency of 10 Hz and at a temperature of 23°C.
